# EUROPEAN PATENT APPLICATION

(11) **EP 4 446 581 A1**
(43) Date of publication of application: **16.10.2024**
(21) Application number: 23168007.5
(22) Date of filing: 14.04.2023
(51) Int. Cl.: F03D 13/25, F03D 13/40

(54) **SYSTEM FOR LOADING AT LEAST ONE CONTAINER FROM AND/OR TO A PLATFORM OF AN OFFSHORE WIND TURBINE TO AND/OR FROM A TRANSPORT VESSEL, METHOD FOR LOADING AT LEAST ONE CONTAINER AND OFFSHORE WIND TURBINE**

(71) Applicant: Siemens Gamesa Renewable Energy A/S, 7330 Brande (DK)
(72) Inventor: Soerensen, Johnny, 6920 Videbaek (DK)
(74) Representative: SGRE-Association

(57) **Abstract**

System for loading at least one container from and/or to a platform of an offshore wind turbine to and/or from a transport vessel, method for loading at least one container and offshore wind turbine.

A system (100) for loading a container from a platform of an offshore wind turbine to a transport vessel is being provided. The system (100) comprises a platform arranged at a tower of the wind turbine and a loading apparatus. The loading apparatus (15) is arranged on the platform (10) of the wind turbine (200) and comprises a transfer structure (16) and a lifting equipment (17). The transfer structure (16) is configured to transfer the container (12) between a storing and a loading position. The lifting equipment (17) is configured to move the container (12) between the loading and a transport position. In the storing position, the container (12) is stored on the platform (10). In the loading position, the container is lowerable. In the transport position, the container (12) is lowered such as to be receivable by the transport vessel (22).

## Description

### FIELD OF THE INVENTION

The present invention relates to the field of offshore wind turbines. Furthermore, the invention relates to a system for loading at least one container from and/or to a platform of an offshore wind turbine to and/or from a transport vessel, a method for loading at least one container from and/or to a platform of an offshore wind turbine to and/or from a transport vessel and an offshore wind turbine with such a system.

### BACKGROUND

Offshore wind turbines may be configured to produce hydrogen for example. The produced hydrogen will hence have to be stored or saved in containers arranged at the offshore wind turbine itself. Such containers are generally placed and stored on a platform of the wind turbine. The containers are compact and in general full of equipment. Such containers may be exchanged several times in the wind turbine's life time. E.g., the containers have to be exchanged regularly, for example every five to seven years, in order to unload the full one from the platform and load empty ones on the platform.

In order to exchange containers placed on a platform of an offshore turbine, a crane is in general provided on a vessel. Such a crane must however have an appropriate range such as to be able to reach the platform. The platform is generally placed quite high above the sea level such as to be resistant against sea storms. Hence, a vessel with an offshore crane is very expensive. In addition, the crane needs to deal with very heavy containers. Hence, the crane and the vessel have to be very robust. Such vessels are very expensive.

Furthermore, in contrast to traditional oil and gas offshore platform, the place available on an offshore wind turbine is small. Hence, it may be desirable to provide a compact equipment allowing loading and unloading containers from and/or to a platform of an offshore wind turbine. In addition, it may be advantageous to have space on the platform in order to be able to work on the equipment.

Accordingly, it may be desirable to provide for an improved compact and cost efficient system for exchanging containers of an offshore wind turbine, which at least mitigate some of the above-mentioned drawbacks of conventional systems and procedures.

### SUMMARY

According to a first aspect of the present disclosure, the problem is solved by a system for loading at least one container from and/or to a platform of an offshore wind turbine to and/or from a transport vessel. The system comprises a platform arranged at a tower of the offshore wind turbine and a loading apparatus. The platform is configured to store the at least one container. The loading apparatus is arranged on or at the platform and/or the tower of the offshore wind turbine and comprises a transfer structure and a lifting equipment. The transfer structure is configured to transfer the at least one container between a storing position and a loading position. Further, the lifting equipment is configured to move the at least one container between the loading position and a transport position. In the storing position, the at least one container is stored at or on the platform. In the loading position, the at least one container is released from the platform to be lowerable from the platform to the transport position. In the transport position, the at least one container is lowered relative to the platform such as to be receivable by the transport vessel. Further, the loading apparatus is configured to move the at least one container having a weight of more than a heavyweight threshold, for example more than 20 t, between the storing position, the loading position and the transport position.

In other words, a system may be provided for loading one or more container from or to a platform of an offshore wind turbine. The system comprises a loading apparatus, which may be configured to move one container at the time, whereas it preferably is robust and can handle containers having a heavyweight threshold of at least 20 t, preferably more than 30 t, more preferably of more than 50 t. Such a system allows loading containers from and to a platform from and to a transport vessel, which may hence be much more cost-efficient in comparison with vessels needed to load or unload containers from offshore wind turbines known in the art.

The configuration of the system for being suitable to transport heavyweight containers with mentioned heavyweight threshold specifies the subject matter in such that it has not been able until now to provide a solution applicable to a platform of an offshore wind turbine. For the first time the invention provides the new and surprising benefit that the system can be installed to the platform of an offshore wind turbine, in particular without resulting in an overcapacity for the support structure of the offshore wind turbine.

Hence, a cost-efficient and reliable system for loading a container from a platform of an offshore wind turbine to a transport vessel and/or for loading a container to a platform of an offshore wind turbine from a transport vessel is provided. Such a system further allows providing a compact system for exchanging container(s) of an offshore wind turbine.

The storing position of a/the container may designate a position in which the container may for example be opened by a service person being on the platform, be plugged in to a H2 production pipe and/or may simply be stored at or on the platform. In the storing position, the container is preferably stably stored, whereas the term stably or stable designate a state in which the container could stay for years in this position without essentially damaging or weakening any structure or elements of the system or of the offshore wind turbine. In the storing position, the container may possibly be fixed to the platform and/or to the tower of the offshore wind turbine.

The loading position of a/the container may designate a position in which the container is ready to be lowered. In the loading position, the container may be placed over an open water area, i.e., over an area with no platform under it. It may be thinkable that the loading position defines a position of the container which is vertical over a transport vessel, assuming the transport vessel has already been positioned to receive the container. The loading position may alternatively or in addition designate a state or a position of the container in which merely the lifting equipment needs to be operated in order to move the container between the loading position and the transport position.

The transport position of a/the container may designate a position in which the container is ready to be transported by the vessel. The transport position may hence designate a position of the container on the transport vessel or almost on the transport vessel. The transport position may relate to a height of the container. Hence, in general, the transport position may have the same horizontal coordinates than the loading position, however different vertical coordinates. A vertical translation between the loading position and the transport position may be feasible. It is noted that as transport vessel, a barge may also be used.

It is noted that the term "position" should be understood broadly in the context of the present disclosure. A position may designate a state and/or a geographic position and/or a 3D- or 2D-area, i.e., an area in which the container may be placed.

A transition from one position to another may be carried out or conducted smoothly. Hence, the transition from one position to another may not necessarily be discrete or well-defined.

The platform of the offshore wind turbine may generally be configured to store at least six containers or at least eight containers or at least ten containers. Hence, the platform may comprise a support surface, i.e., a storing surface or a cross-sectional area big enough to store six, eight or more containers on the platform, whereas the stored containers are preferably positioned next to one another. The containers stored on the platform are preferably not superposed. The platform of the offshore wind turbine may be positioned at the offshore wind turbine such that the tower of the offshore wind turbine goes through the platform essentially in the middle of the platform. In other words, the platform may be rotationally symmetrically positioned with respect to the tower of the offshore wind turbine. The platform may be placed on the tower of the offshore wind turbine such as to be resistant to sea storms. Hence, the platform may be positioned at an appropriate height, e.g., more than 15 m, in particular more than 20 m, preferably more than 25 m, further preferably more than a 35 m, and/or in particular preferably more than 50 m over the sea level.

The loading apparatus may comprise several components and/or elements. The loading apparatus may comprise two groups or categories of components and/or elements. Indeed, the loading apparatus may comprise at least a transfer structure and a lifting equipment. The transfer structure and the lifting equipment may be directly or indirectly coupled to one another. Preferably, an operation mode of the transfer structure correlates with an operation mode, in particular a predefined operation mode, of the lifting equipment. The transfer structure and the lifting equipment may be operated simultaneously or in a staggered manner. For instance, the transfer structure may first be operated in order to transfer the container from a loading position to a storing position or vice versa and subsequently, the lifting equipment may be operated to lower or alternatively lift the container from the loading position to a transport position or vice versa. The loading apparatus and in particular the transfer structure may further comprise one or more cylinder, such as hydraulic cylinders.

In general, the loading apparatus, that is, the transfer structure and/or the lifting equipment may be driven or powered with a power unit. Such a power unit may be placed on or at the platform as well as for example in the tower of the offshore wind turbine.

It is noted that said system may be a fully automated system. In other word, said system may be fully remotely operated, e.g., from a transport vessel. Hence, no technician or person must be present on the platform of the offshore wind turbine to operate the system.

According to an embodiment, the system is not configured to being exclusively capable of transporting a lightweight container (or an empty container), for example having a weight of essentially less than 20 t.

According to an embodiment of the system, the transfer structure and/or the lifting equipment are/is configured to move and/or transfer the at least one container such that an orientation of the at least one container is essentially constant, in particular essentially constantly horizontal.

In other words, a transfer which allow transferring and/or lifting, i.e., lowering, a container without essentially changing its orientation may be provided. In the storing position, the container may be positioned with a defined orientation. Said orientation may essentially stay constant as the container is transferred from the storing position to the loading position or vice versa, and as the container is moved from the loading position to the transport position and vice versa.

It may hence be advantageous to equip the container(s) with an inclination sensor or a gyroscope. Therefore, such a sensor may give the loading apparatus instructions and/or feedback on whether the loading apparatus is transferring and/or moving the container in a manner which conserve the orientation of the container. It may also be thinkable that the lifting equipment is controlled or operated such as to compensate unwanted movements of the container while being lowered. Indeed, while the lifting equipment lowers or lifts the container from the loading position to the transport position or vice versa, the container may rock due to wind or weather condition. The lifting equipment may for example receive data from a gyroscope installed at the container such as to compensate such undesirable movements.

This may be advantageous as the container being loaded or unloaded may contain sensitive and/or dangerous equipment and/or filling. Hence, this may provide an even more reliable system.

According to an embodiment of the system, the system, the transfer structure and/or the lifting equipment comprises a wave compensation arrangement for minimizing a relative movement between the container and the transport vessel, and thereby mitigating threat of damaging due to unwanted and wave movement induced collision between the container and the transport vessel. For example, the wave compensation arrangement may comprise the lifting system and/or the transfer structure being configured such that the container, when hanging on the lifting equipment, conducts a movement at least partially aligned with a movement of a loading surface of the transport vessel. For this purpose, the wave compensation arrangement may comprise detection means in order to detect a relative movement between the container and the loading surface of the transport vessel, wherein the wave compensation arrangement is equipped with a control device for controlling the transfer structure and/or the lifting equipment accordingly.

According to an example of the preceding embodiment, the transfer structure and/or the lifting equipment are configured for compensating a relative movement in vertical direction, and thereby adapting container's movement to a heave movement of the loading surface of the transport vessel.

The movement of the compensation for reducing relative movement between the container and the loading surface of the vessel may be added to an overall lifting or lowering movement of the system, in particular of the lifting equipment.

The wave compensation arrangement may be an active heave compensation system, e.g. the wire connected to the container is moved with a winch, wherein such active system can be electrical or hydraulic. This enables the container to follow the vessel up and down in the waves.

According to an embodiment of the system, the transfer structure is an integral part of the platform or is arranged to the platform.

In the context of the present disclosure, being an integral part of the platform may be understand as being part of the ground plate of the platform. The transfer structure may hence be configured such as in the storing position, the at least one container is stored both at the platform and by the transfer structure. A transfer structure being an integral part of the platform may also designate a transfer structure which is sealed or irremovably attached to the platform.

A transfer structure being arranged to the platform may designate any transfer structure being placed on, fixed at or coupled with the platform.

This may advantageously provide an even more compact, resistant and durable system.

According to an embodiment of the system, the loading apparatus comprises one transfer structure for each of the at least one container and/or one lifting equipment for each of the at least one container.

Hence, the system may comprise numerous lifting equipment and/or numerous transfer structures.

This may be advantageous as the containers may not need to be moved on the platform before being loaded to a transport vessel. Alternatively, it may also allow to load the container from the transport vessel and directly place the loaded container at different positions on the platform, without having to move a container before loading the next one.

Further, this allows providing a more reliable system for loading at least one container from and/or to a platform of an offshore wind turbine to and/or from a transport vessel, since, if one lifting equipment and/or transfer structure fails or is broken, another one may be still usable.

According to an embodiment of the system, the platform comprises one opening for each of the at least one container. Each opening is configured to be at least partially closed by at least a part of a transfer structure. Each opening is configured such that one container is movable between the loading position and the transport position through the opening.

In other words, the platform of the system may be configured such that a container may be stored or held at the platform as long as the corresponding opening is at least partially closed. By completely opening the corresponding opening, the container which is placed at the opening at the platform may be moved through the opening such as to be lowerable. Hence, while the one opening is at least partially closed, the corresponding container, i.e., the container placed at the opening at the platform, is in the storing position. When the one opening is completely opened, that is e.g., when the transfer structure is controlled such as to open the opening, the corresponding container is in the loading position.

Such an embodiment of the system may advantageously allow to transfer the container from a storing position to a loading position without having to induce a movement of the container other than a vertical movement. A vertical movement designates a movement in the z-direction, that is essentially parallel to the tower of the offshore wind turbine.

According to an embodiment of the system, the transfer structure comprises at least one swivel arm mounted to the platform, in particular swiveling mounted to the platform. The lifting equipment is mounted to the at least one swivel arm. The at least one swivel arm is configured to transfer the at least one container between the storing position and the loading position.

In general, providing a swivel arm may advantageously allow a smooth and precise transfer of the container between the storing position and the loading position. One or more swivel arms may be provided. The at least one swivel arm may be directly or indirectly coupled to the platform and/or to the tower of the offshore wind turbine. The swivel arm may for example comprise a joint over which it is coupled to another swivel arm or the platform of the offshore wind turbine.

The expression mounted to the at least one swivel arm may designate a direct or indirect coupling.

Cylinder(s) may also be provided. One cylinder, in particular a hydraulic cylinder, for each swivel arm may be provided.

According to an embodiment of the system, the transfer structure comprises one sliding mechanism mounted to the platform or to a/the at least one swivel arm.

Hence, the at least one container may slide between a storing position and a loading position and vice versa.

According to an embodiment of the system, the loading apparatus further comprises a positioning system, in particular a rail system. The positioning system is configured to move the at least one container on or at the platform.

This may advantageously allow to position the at least one container which has to be loaded from the platform to a transport vessel, before the transfer structure may initiate the transfer of the at least one container from the storing position to the loading position.

Alternatively, or in addition, this may advantageously allow to position the at least one container which has already been loaded to the platform from the transport vessel in order to change its storing position, e.g., in order to make place for a further container which has to be loaded to the platform.

According to an embodiment of the system, the system further comprises a control unit configured to control, in particular remotely control, the loading apparatus.

For example, the control unit may be controlled such as to initiate a loading operation of a container from and/or to a platform of an offshore wind turbine to and/or from a transport vessel. The at least one container which has to be loaded may be tagged, such that the control unit automatically controls the loading apparatus towards the corresponding, i.e., the correct, container.

By remotely controlling the loading apparatus, a safe system for loading at least one container from and/or to a platform of an offshore wind turbine to and/or from a transport vessel may be provided.

According to an embodiment of the system, the system further comprises a control unit configured to release a security signal to lock the blades of the offshore wind turbine in a predefined position.

Such a control unit may be the control unit, which is configured to control the loading apparatus. Alternatively, there may be different control units provided.

According to an embodiment of the system, a/the control unit is configured to release a signal when the at least one container is in the loading position. In particular, the signal comprises geographic information about the loading position.

Such a signal may advantageously improve the transition from the loading position to the transport position and/or from the transport position to the loading position. Indeed, when the at least one container is in the loading position, it will most probably shortly, soon either be moved in the transport position or transferred to the storing position. The transport vessel may hence be accordingly controlled such as to be ready to receive the at least one container. Alternatively, or in addition, further containers being stored at or on the platform may be accordingly re-positioned on or at the platform such that the at least one container may be received on or at the platform without any container being in the way.

According to a second aspect of the present disclosure, a method for loading at least one container from and/or to a platform of an offshore wind turbine to and/or from a transport vessel is provided. The method comprises at least the following steps:
o Transfer the at least one container between a storing position and a loading position using a transfer structure of a loading apparatus arranged on or at a platform and/or a tower of the offshore wind turbine, and
o move the at least one container between the loading position and a transport position using a lifting equipment of the loading apparatus.

In the storing position, the at least one container is stored at or on the platform. In the loading position, the at least one container is released from the platform and lowered relative to the platform to the transport position such as to be receivable by the transport vessel.

Latter method may hence provide a cost-efficient and simplified method for loading at least one container from and/or to a platform of an offshore wind turbine to and/or from a transport vessel.

With such a method, a container may be exchanged and/or loaded faster than with known methods.

According to an embodiment of the method, the system, as described hereinabove and hereinbelow, is used.

According to an embodiment of the method, the method further comprises the following step:
o Releasing the loading apparatus such as to position the at least one container in the storing position on or at the platform or in the transport position on the transport vessel.

According to a second aspect of the present disclosure, an offshore wind turbine is provided. The offshore wind turbine comprises a tower, a nacelle, rotor blades and a system as described hereinabove and hereinbelow.

The offshore wind turbine may be part of a wind farm for example. The offshore wind turbine may be a wind turbine with fixed-foundation. Alternatively, it is thinkable that the offshore wind turbine is a floating offshore wind turbine.

According to an embodiment of the offshore wind turbine, the offshore wind turbine further comprises an interface, in particular a plug-in device, configured to be connected to the at least one container when the at least one container is positioned at or on the platform, in particular in the storing position.

Providing an interface may advantageously allow to fill or charge at least a part or a content of the container with the produced energy and/or H2 for example. Said interface may also advantageously allow an exchange of data between the offshore wind turbine and one or more container. This may improve managing the containers stored at or on the platform of the offshore wind turbine.

According to an embodiment of the offshore wind turbine, the offshore wind turbine further comprises a security unit being configured to lock the rotor blades of the offshore wind turbine in a predefined position. The security unit is further configured to be controlled by the control unit of the system.

In other words, the position of the rotor blades of the offshore wind turbine may be controlled such as e.g., not to impact a container being loaded and/or a loading apparatus in operation. The control unit may be configured to detect a movement of a container and/or a loading apparatus and hence generate a signal which can be sent to the security unit. In order to detect a movement of a container and/or a loading apparatus, cameras may be installed on or at the platform and/or on or at the tower of the offshore wind turbine. Alternatively, or in addition, movement sensor(s) may be installed on one or more containers and/or on one or more loading apparatus.

Generally, any feature, function, element and/or advantage which is described hereinabove and hereinbelow with reference to one aspect of the present disclosure, equally applies to any other aspect of the disclosure as described above and in the following.

Particularly, unless explicitly stated otherwise, features, functions, elements, and/or advantages as described above and in the following with reference to the system equally apply to the method and/or to the offshore wind turbine as described hereinabove and in the following and vice versa.

It is to be understood that the features mentioned above and those yet to be explained below can be used not only in the respective combinations indicated, but also in other combinations or in isolation, without leaving the scope of the present invention. In particular, the features of the different aspects, embodiments and/or methods of the invention can be combined with each other unless noted to the contrary.

### BRIEF DESCRIPTION OF THE DRAWINGS

The aforementioned and other features and advantages of the invention will become further apparent from the following detailed description read in conjunction with the accompanying drawings. In the drawings, like reference numerals refer to like elements.
Fig. 1 shows a system according to the state of the art,
Fig. 2 shows a system according to an exemplary embodiment,
Fig. 3 shows a system according to a further exemplary embodiment,
Fig. 4 shows a system according to a further exemplary embodiment,
Figs. 5a and 5b show a detailed view of a part of the system according to the exemplary embodiment of fig. 4,
Fig. 6 shows a system according to a further exemplary embodiment,
Fig. 7 shows a detailed view of a part of a system according to the exemplary embodiment of fig. 6,
Fig. 8 shows a detailed view of a part of a transfer structure of a system according to the exemplary embodiment of figs. 6 and 7, and
Fig. 9 shows an offshore wind turbine according to an exemplary embodiment.

The figures are schematic only and not true to scale. In principle, identical or like parts, elements and/or steps are provided with identical or like reference numerals in the figures.

### DETAILED DESCRIPTION

While specific embodiments are disclosed hereinafter, various changes and modifications can be made without departing from the scope of the invention. The present embodiments are to be considered in all respects as illustrative and non-restrictive, and all changes coming within the meaning and equivalency range of the appended claims are intended to be embraced therein.

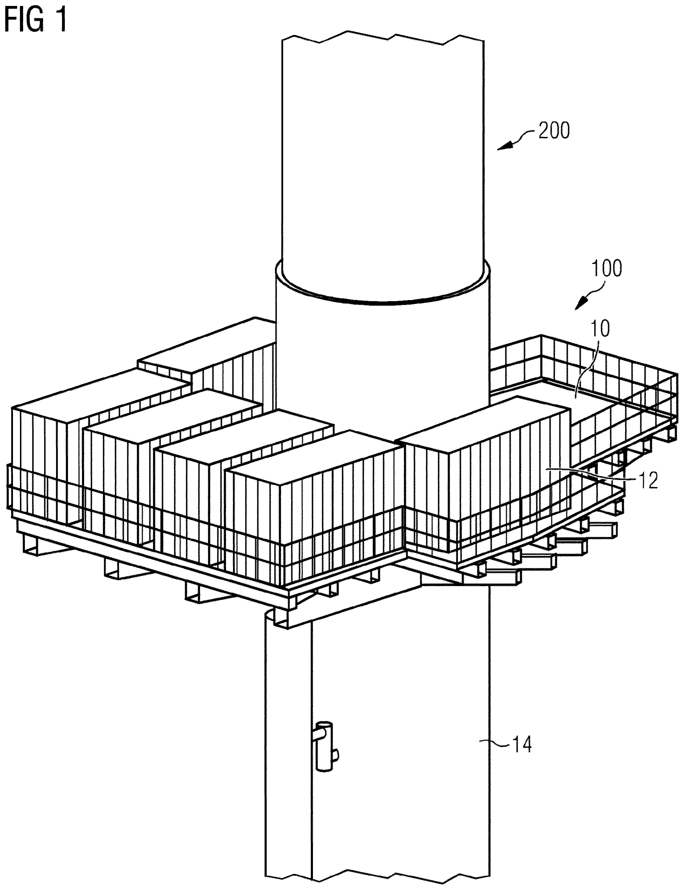

Fig. 1 describes a system according to the state of the art. The system of fig. 1 comprises a platform 10 arranged at a tower 14 of the offshore wind turbine 200. In fig. 1, merely a part of the tower 14 of the offshore wind turbine 200 is illustrated. On the platform 10 of the system 100 of fig. 1, six containers 12 are stored, i.e., positioned. In order to load such containers from and/or to the platform of the offshore wind turbine to and/or from a transport vessel, an equipment placed at the transport vessel will have to be used. Vessels with such equipment are very expensive.

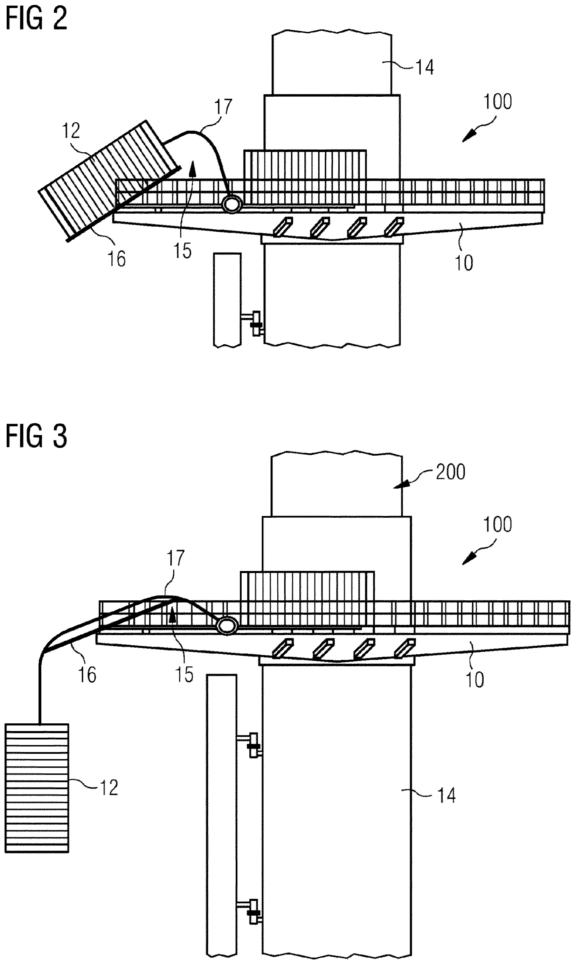

Fig. 2 describes a system 100 for loading at least one container 12 from and/or to a platform 10 of an offshore wind turbine 200 to and/or from a transport vessel 22 according to an exemplary embodiment of the invention. The system 100 comprises a platform 10 arranged at a tower 14 of the offshore wind turbine 200. On or at the platform, one or more containers 12 may be stored or placed. Further, the system 100 comprises a loading apparatus 15. The loading apparatus 15 is arranged on or at the platform 10. A part of the loading apparatus 15 or the whole loading apparatus 15 may also be arranged on or at the tower of the offshore wind turbine. The loading apparatus 15 may in general be configured to transfer and move a container from a transport position to a loading position and to a stored position or vice versa.

The loading apparatus 15 may comprise numerous elements and/or components. The elements and/or components of the loading apparatus 15 may be broken down into two categories. The loading apparatus 15 comprises a transfer structure 16, which may or may not have numerous element and/or components, and a lifting equipment 17, which may or may not have numerous element and/or components.

The transfer structure 16 is configured to transfer one container 12 from a storing position to a loading position and vice versa. Via the transfer structure 16, the container may generally be moved in different spatial directions. In the storing position, the container 12 is stored at or on the platform 10. Hence, in the storing position, the container 12 is held via the platform and/or at least a part 19 of the transfer structure 16. In the loading position, the container 12 is generally placed over an open water area. Hence, in the loading position, the container may be lowered without having any obstacle along its vertical trajectory.

It is noted that the containers 12 placed or stored at or on the platform 10 of the tower 14 of the offshore wind turbine 200 have a weight of more than 20 t. Hence, the loading apparatus 15 may be correspondingly equipped and configured such as to be able to move and/or transfer such a heavy container 12. The container 12 may comprise electrolysers in order to store energy produced by the offshore wind turbine. Alternatively, or in addition, the container may comprise equipment, such as maintenance equipment for the offshore wind turbine. One may distinguish between two types of containers. Some containers may only contain equipment and may hence not need to be exchanged very regularly. Some other containers may contain electrolysers and hence may need to be replaced regularly, that is, every five to seven years for the electrolyser stacks. Hence, depending of the type of container, the container may be positioned differently, i.e., accordingly, on the platform 10 of the offshore wind turbine 200.

In the concrete example of fig. 2, the container 12 is being transferred from its storing position to its loading position, where it will be above the water of the offshore wind turbine. In order to transfer the container 12 of fig. 2, the transfer structure 16 comprises a sliding mechanism. The sliding mechanism may be combined with a tipping arrangement, such as a swivel arm. After the container 12 has been tipped with a predefined angle, the container 12 may slide along the tipping arrangement and be positioned as shown in fig. 2. The container 12 is attached to a lifting arrangement 17, which can be, for example, a wire attached to the container and to a winch. Through the container's own weight, the container will then be able to move over the platform 10.

Fig. 3 describes a system 100 according to an exemplary embodiment of the invention, whereas the loading apparatus 15 of the system 100 of fig. 3 is the same as the one of fig. 2. In the concrete example of fig. 2, the container 12 is in the/a loading position. Via the lifting equipment 17, the container 12 may be lowered towards a transport vessel 22 being placed such as to be able to receive such a container. Alternatively, the container 12 of fig. 2 may be lifted towards the platform 10 of the offshore wind turbine. Hence, in fig. 3, the container may be moved from the loading position to the transport position or vice versa.

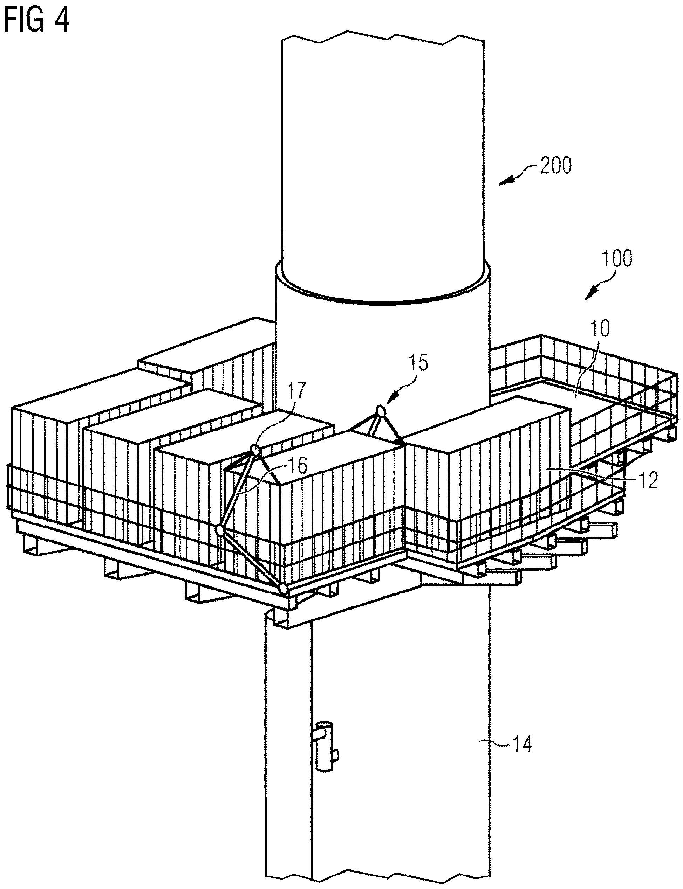

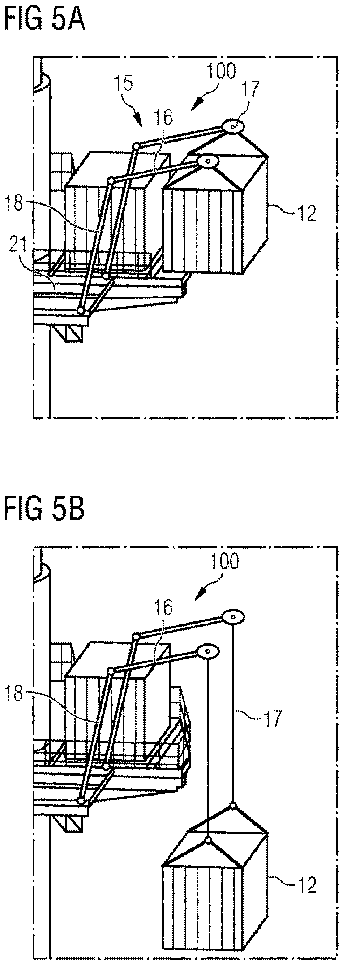

Fig. 4 describes a system 100 according to a further exemplary embodiment. In comparison with the system 100 of figs. 2 and 3, the system 100 of fig. 4 comprises a different loading apparatus 15. The loading apparatus of the system 100 of fig. 4 comprises two pairs of swivel arms 18, cf. figs. 5a and 5b. In general, the transfer structure 16 and/or the lifting equipment 17 are/is configured to move and/or transfer the at least one container 12 such that its orientation is essentially constant, in particular essentially constantly horizontal. Hence, while the container 12 is transferred form the storing position to the loading position and vice versa, the container may be translated in one or two spatial directions while remaining horizontal. The container 12 may further remain horizontally oriented as it is moved from the loading position to the transport position and vice versa.

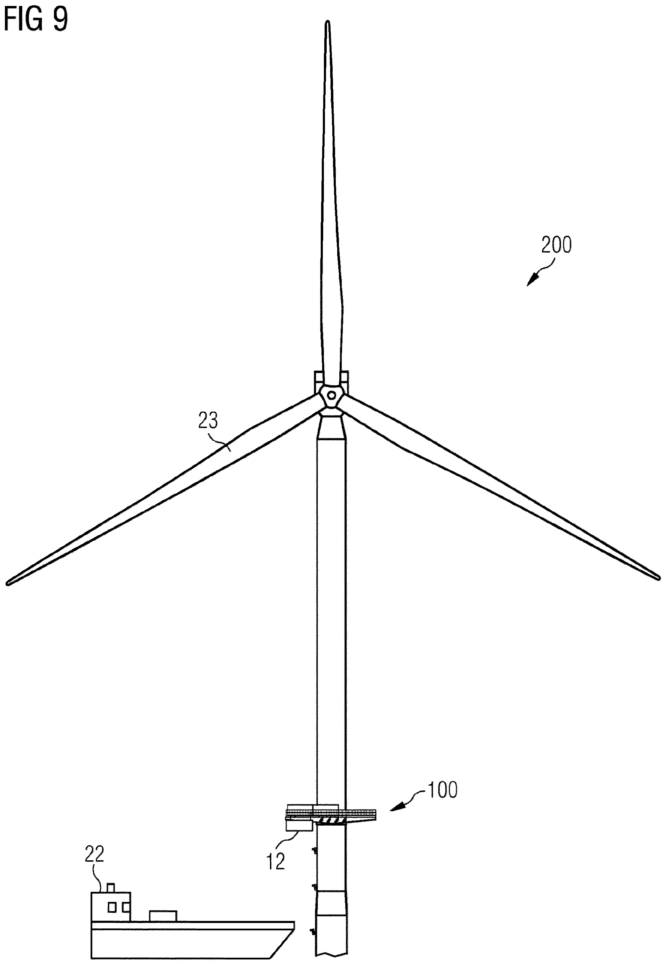

Figs. 5a and 5b describe a detailed view of a part of the system according to the exemplary embodiment of fig. 4. It is noted that figs. 4, 5a and 5b may chronologically illustrate a loading process of the container 12 from the platform 10 of the offshore wind turbine 200 to a transport vessel 22. It follows that figs. 5b, 5a and 4 may chronologically summarize a loading process of the container 12 to a platform 10 of the offshore wind turbine 200 from a transport vessel 22. The transfer structure 16 of the loading apparatus 15 of the system of figs. 4, 5a and 5b comprises at least two pairs of swivel arms. The swivel arm may comprise articulations which allow transferring the container via translation in one or two spatial directions at the same time. The two pairs of swivel arms 18 may be configured to move in a synchronized manner. In fig. 5a, the container 12 is placed in the loading position and hence can be lowered, in particular along the z-axis, i.e., the vertical axis, towards the vessel 22, cf. fig. 9. The transfer structure 16 may be hydraulically or electrically powered. The lifting equipment 17 may comprise a winch. The container 12 or the lifting equipment 17 itself may be provided with a fastening means, such that the rope or the wire of the lifting equipment 17 may be attached directly or indirectly to the container 12.

The platform 10 of the system 100 of figs. 4, 5a and 5b may be provided with an indentation or a recess, such as to facilitate the transfer of the container 12 in its loading position. The system 100 of figs. 4, 5a and 5b may comprise one loading apparatus 15 for each container 12.

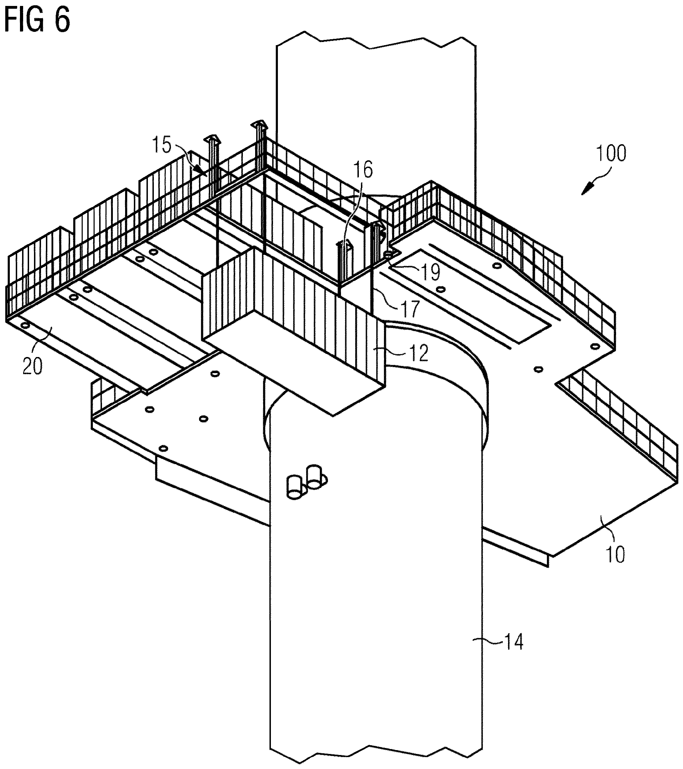

Fig. 6 describes a system 100 according to a further exemplary embodiment. Unless specified otherwise, the system 100 of fig. 6 comprises the same elements and/or components as the system of figs. 2 - 5b.

The loading apparatus 15 of the system 100 of fig. 6 differs from the loading apparatus of figs. 2 - 5b. The transfer structure 16 of the loading apparatus 15 of fig. 6 may comprise four piers, poles or pillars. The piers have preferably a bigger high than the high of the container 12 so that the piers, that is, the transfer structure 16, may transfer the container 12 from the loading position to the storing position, in which the container 12 should be at least slightly higher than the platform 10 level. The piers, that is, the transfer structure 16 is coupled to the lifting equipment 17 of the loading apparatus 15 of fig. 6.

Further, the transfer structure 16 comprises a part 19 which is configured to at least partially close an opening of the platform 10 of the system. Indeed, with the exemplary embodiment of fig. 6, the container 12 does not need to be transferred nor moved in another spatial direction than the vertical direction, i.e., the z-direction. Hence, an opening 20 is provided at the platform 10 of the system 100. The platform 10 may comprise one opening for each container. Alternatively, the platform 10 may comprise less openings than there is place for containers 12 on or at the platform 10. Therefore, it is possible that some containers 12 are not placed over an opening 20 of the platform 10 and that some other containers 12 are placed over an opening 20 of the platform 10.

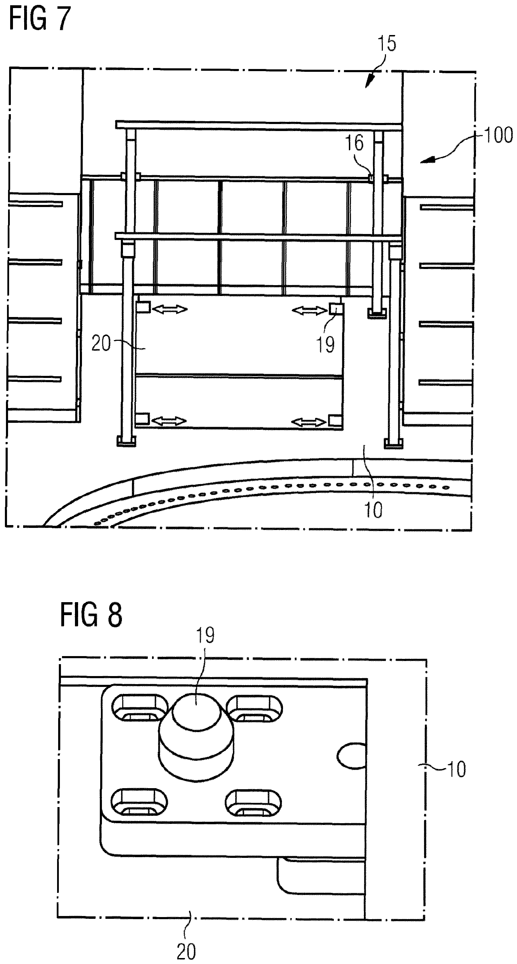

Fig. 7 describes a detailed view of the loading apparatus 15 of a system 100 according to the exemplary embodiment of fig. 6.

Fig. 8 describes a detailed view of a part 19 of a transfer structure 16 of a system according to the exemplary embodiment of figs. 6 and 7. The transfer structure 16 may comprise four piers which each are connected to the lifting equipment 17. The platform 10 of the system 100 according to the embodiment of fig. 6 comprises an opening 20 which is configured such that one container 12 is movable between the loading position and the transport position through the opening 20. When the container 12 is in the storing position, it is preferably held aligned to the opening 20 above the opening 20. Therefore, the transfer structure 16 may be provided with a part 19 configured to at least temporarily close the opening. The part 19 of the transfer structure 16 hence is configured to hold the container 12. The container 12 may be provided with a form-fit locking notch or the like so that the part 19 of the transfer structure 16 can be locked in such a locking notch in order to ensure a certain stability while holing or storing the container 12 on the platform 10.

The part 19 of the transfer structure 16 may be an interlocking retaining elements, e.g., with a prominence or the like. The part 19 of the transfer structure 16 may be configured to slide from under or from inside the platform out into the opening or vice versa. The part 19 may be configured to be moved between two configurations: A first configuration in which the part 19 at least partially closes the opening and a second configuration in which the part 19 is absent from the opening.

Fig. 9 shows an offshore wind turbine 200 according to an exemplary embodiment. The offshore wind turbine 200 comprises a system 100 such as shown on one of the figs. 2 - 8 for example. The offshore wind turbine 200 comprises further a tower 14, a nacelle and rotor blades 23. A security may be provided, which is configured to lock the rotor blades 23 of the offshore wind turbine 200 in a predefined position. When a container 12 is being loaded from or to the platform 10, the offshore wind turbine, in particular the security unit of the offshore wind turbine, may receive a corresponding signal instructing the offshore wind turbine to stop and possibly turn away the blades 23 from a working area, wherein the working area is an area around the container 12 being loaded. The rotor blades 23 will then be locked for a predefined duration or until a release signal has been received.

It is noted that the system 100 may further be equipped with a control unit configured to release a signal when a container 12 is in the loading position. It may be advantageous that the signal comprises geographic information about the loading position, such as gpx-data or the like. That way, the transport vessel 22, which may be configured to receive the released signal, may process the geographic information and be controlled such as to be positioned correspondingly, that is, preferably vertically under the container. The transport vessel 22 may be a traditional service offshore vessel. This allows saving cost on the lifetime of a H2 wind farm for instance.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless otherwise noted, in addition to any combination of features belonging to one type of subject matter, any combination between features relating to different subject matters, in particular between features of the apparatus type claims and features of the method type claims, is also considered to be disclosed within this application.

In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to an advantage. Any reference signs in the claims should not be construed as limiting the scope.

## Claims

1. System (100) for loading at least one container (12) from and/or to a platform (10) of an offshore wind turbine (200) to and/or from a transport vessel (22), the system (100) comprising:
a platform (10) arranged at a tower (14) of the offshore wind turbine (200), and a loading apparatus (15),
wherein the platform (10) is configured to store the at least one container (12), and
wherein the loading apparatus (15) is arranged on or at the platform (10) and/or the tower (14) of the offshore wind turbine (200) and comprises a transfer structure (16) and a lifting equipment (17),
wherein the transfer structure (16) is configured to transfer the at least one container (12) between a storing position and a loading position, and
the lifting equipment (17) is configured to move the at least one container (12) between the loading position and a transport position,
wherein in the storing position, the at least one container (12) is stored at or on the platform (10),
wherein in the loading position, the at least one container is released from the platform (10) to be lowerable from the platform (10) to the transport position,
wherein in the transport position, the at least one container (12) is lowered relative to the platform (10) such as to be receivable by the transport vessel (22), and
wherein the loading apparatus (15) is configured to move the at least one container (12) having a weight of more than 20 t between the storing position, the loading position and the transport position.

2. System (100) according to claim 1, the system (100), the transfer structure (16) and/or the lifting equipment (17) comprise(s) a wave compensation arrangement for minimizing a relative movement between the container (12) and a loading surface of the transport vessel (22), in particular wherein the lifting system (17) and/or the transfer structure (16) being configured such that the container (12), when hanging on the lifting equipment (17), conducts a movement which is at least partially aligned with a movement of a loading surface of the transport vessel (22).

3. System (100) according to claim 1 or 2, wherein the transfer structure (16) and/or the lifting equipment (17) are/is configured to move and/or transfer the at least one container (12) such that an orientation of the at least one container (12) is essentially constant, in particular essentially constantly horizontal.

4. System (100) according to at least one of the preceding claims, wherein the transfer structure (16) is an integral part of the platform (10) or is arranged to the platform (10).

5. System (100) according to at least one of the preceding claims, wherein the loading apparatus (15) comprises one transfer structure (16) for each of the at least one container (12) and/or one lifting equipment (17) for each of the at least one container (12).

6. System (100) according to at least one of the preceding claims,
wherein the platform (10) comprises one opening (20) for each of the at least one container (12),
wherein each opening (20) is configured to be at least partially closed by at least a part (19) of a transfer structure (16), and
wherein each opening (20) is configured such that one container (12) is movable between the loading position and the transport position through the opening (20).

7. System (100) according to at least one of the preceding claims,
wherein the transfer structure (16) comprises at least one swivel arm (18) mounted to the platform (10), in particular swiveling mounted to the platform (10),
wherein the lifting equipment (17) is mounted to the at least one swivel arm (18), and
wherein the at least one swivel arm (18) is configured to transfer the at least one container (12) between the storing position and the loading position.

8. System (100) according to at least one of the preceding claims, wherein the transfer structure (16) comprises one sliding mechanism mounted to the platform (10) or to a/the at least one swivel arm (18).

9. System (100) according to at least one of the preceding claims,
wherein the loading apparatus (15) further comprises a positioning system (21), in particular a rail system, and wherein the positioning system (21) is configured to move the at least one container (12) on or at the platform (10).

10. System (100) according to at least one of the preceding claims, further comprising a control unit configured
to control, in particular remotely control, the loading apparatus (15),
to release a security signal to lock the blades (23) of the offshore wind turbine (200) in a predefined position, wherein in particular, the signal comprises geographic information about the loading position.

11. Method for loading at least one container (12) from and/or to a platform (10) of an offshore wind turbine (200) to and/or from a transport vessel (22), the method comprising at least following steps:
Transferring the at least one container (12) between a storing position and a loading position using a transfer structure (16) of a loading apparatus (15) arranged on or at a platform (10) and/or a tower of the offshore wind turbine (200),
moving the at least one container (12) between the loading position and a transport position using a lifting equipment (17) of the loading apparatus (15),
wherein in the storing position, the at least one container is stored at or on the platform (10), and
wherein in the loading position, the at least one container (12) is released from the platform (10) and
lowered relative to the platform (12) to the transport position such as to be receivable by the transport vessel (22).

12. Method according to claim 11, wherein the system according to at least one of the claims 1 to 10 is used.

13. Method according to one of the claims 11 or 12, further comprising the following step of releasing the loading apparatus (15) such as to position the at least one container (12) in the storing position on or at the platform (10) or in the transport position on the transport vessel (22).

14. The method according to one of the claims 11 to 13, comprising the step of at least partially compensating a relative movement between the container (12) and a loading surface of the transport vessel (22)

15. Offshore wind turbine (200), comprising a tower (14), a nacelle, rotor blades (23), and a system (100) according to at least one of the claims 1 to 10, and
in particular comprising
an interface, in particular a plug-in device, configured to be connected to the at least one container (12) when the at least one container (12) is positioned at or on the platform (10), in particular in the storing position, and/or
a security unit being configured to lock the rotor blades (23) of the offshore wind turbine (200) in a predefined position, wherein the security unit is further configured to be controlled by the control unit of the system (100).
